# EUROPEAN PATENT APPLICATION

(11) **EP 4 701 131 A1**
(43) Date of publication of application: **25.02.2026**
(21) Application number: 24223697.4
(22) Date of filing: 30.12.2024
(51) Int. Cl.: H04L 9/40, H04L 45/7453, G06F 9/50, H04L 47/70

(54) **METHOD FOR PACKET PROCESSING AND GATEWAY APPARATUS**

(30) Priority: 19.08.2024 CN 202411140816
(71) Applicant: New H3C Security Technologies Co., Ltd., Hefei, Anhui 230088 (CN)
(72) Inventor: JIANG, Jian, Beijing, 100102 (CN)
(74) Representative: 2SPL Patentanwälte PartG mbB

(57) **Abstract**

Disclosed are a method and an apparatus for packet processing, the method applied to a first gateway apparatus with a hardware decryption module, an IPsec service module, and a plurality of data cores, the method comprises: receiving, by the IPsec service module, a service packet sent by a second gateway apparatus through an IPsec tunnel; invoking, by the IPsec service module, the hardware decryption module in response to a determination that the service packet is encapsulated with, Encapsulating Security Payload, ESP protocol; decrypting, by the hardware decryption module, the service packet, and obtaining an inner packet of the service packet; obtaining, by the IPsec service module, a data core associated with the inner packet on a per-flow basis so that the inner packet is to be forwarded via the associated data core.

## Description

### TECHNICAL FIELD

The present disclosure relates to the field of communication technologies, particularly to a packet processing method and a gateway apparatus.

### BACKGROUND

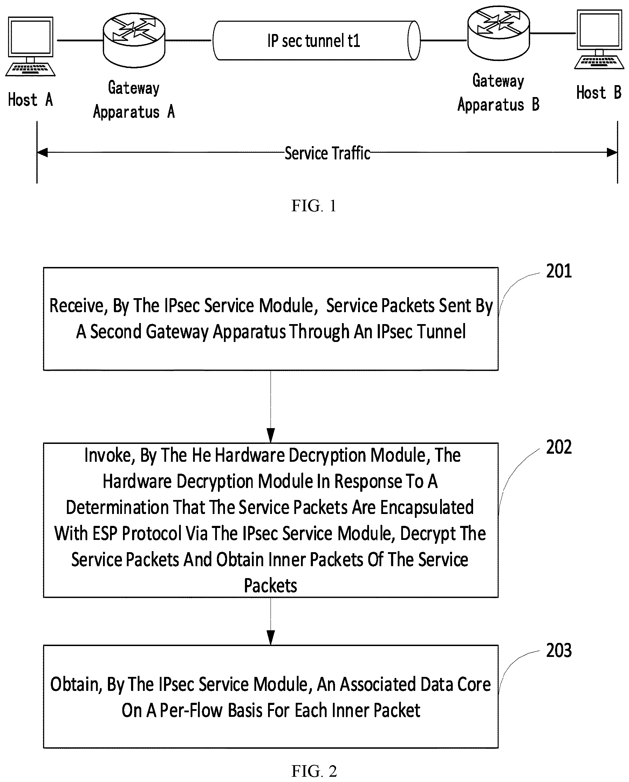

IPsec (IP Security) is a Layer 3 tunnel encryption protocol established by the IETF, which provides high-quality, cryptography-based security assurance for data transmitted on the Internet. The ESP (Encapsulating Security Payload) protocol included in IPsec is generally applied to protect data between two gateway apparatus. As shown in FIG. 1, an IPsec tunnel is established between two gateway apparatuses using the ESP security protocol included in the IPsec protocol. A large number of Host machines in the private networks on the inside of the two gateway apparatuses can access and interact through this IPsec tunnel. For example, when Host A in FIG. 1 sends a service packet to Host B, the service packet needs to be encapsulated by ESP to become cipher text, and then forwarded to Host B through the IPsec tunnel.

When sending service packets, there are two forwarding methods: per-flow and per-packet. Taking the example of gateway apparatus A in FIG. 1 sending multiple Host machines in its internal network to internal network Host machines in the gateway apparatus B through the gateway apparatus B. Regardless of whether gateway apparatus A adopts per-flow or per-packet forwarding, gateway apparatus A will evenly upload the service packets (with different five-tuples) sent by multiple Host machines in the internal network on the gateway apparatus side to each of multiple data cores in gateway apparatus A.

Regardless of whether it is per-flow forwarding or per-packet forwarding, since there is only one IPsec tunnel between gateway apparatus A and the gateway apparatus B, when the data cores in gateway apparatus A perform ESP encryption processing on the service packets sent by multiple Host machines, the resulted encrypted service packets after encapsulation will have the same outer layer five-tuple (5-tuple). When the gateway apparatus B adopts per-flow forwarding, upon receiving each encrypted service packet, due to the identical outer layer 5-tuple of each encrypted service packet, it will cause all the encrypted service packets to be uploaded to the same data core in network apparatus B for decryption and decapsulation processing, resulting in significant processing pressure on that data core, while other data cores will be relatively idle, leading to a waste of resources.

### SUMMARY

In view of this, the present disclosure provides a packet processing method and a gateway apparatus to solve the problem of resource waste in data cores caused by the packet-by-packet forwarding of IPsec-encrypted service packets to the gateway apparatus.

Specifically, the present disclosure is implemented through the following technical solutions:
According to a first aspect of the present disclosure, a packet processing method is provided, which is applied in a first gateway apparatus. The first gateway apparatus comprises a hardware decryption module, an IPsec service module, and multiple data cores. The method comprises:
Receiving, by the IPsec service module, a service packet sent by a second gateway apparatus through an IPsec tunnel;
Invoking, by the IPsec service module, the hardware decryption module in response to a determination that the service packet is encapsulated with, Encapsulating Security Payload, ESP protocol; decrypting, by the hardware decryption module, the service packet, and obtaining an inner packet of the service packet;
Obtaining, by the IPsec service module, a data core associated with the inner packet on a per-flow basis so that the inner packet is to be forwarded via the associated data core.

According to a second aspect of the present disclosure, a gateway apparatus is provided, which comprises a hardware decryption module, an IPsec service module, and multiple data cores, wherein:
The IPsec service module is to receive a service packet sent by a second gateway apparatus through an IPsec tunnel and check an outer encapsulation of the service packet, and invoke the hardware decryption module based on a determination that the service packet is encapsulated with, Encapsulating Security Payload, ESP protocol;
The hardware decryption module is to decrypt the service packet, and obtain an inner packet of the service packet;
The IPsec service module is further to obtain an associated data core from the plurality of data cores, for forwarding the inner packet on a per-flow basis;
The associated data core is to forward the inner packet.

Beneficial effects of examples of the present disclosure:
The packet processing method and gateway apparatus provided in the examples of the present disclosure receive, through the IPsec service module, a service packet sent by a second gateway apparatus through an IPsec tunnel; if, through the IPsec service module, the service packet is identified as a packet encapsulated using the ESP protocol, invoke the hardware decryption module to decrypt the service packet to obtain an inner packet of the service packet; and forward, through the IPsec service module, the inner packet to a corresponding data core in a packet-by-packet manner.

Thus, after the IPsec service module receives a service packet sent by the second gateway apparatus through the IPsec tunnel, when the service packet is identified as being encrypted and encapsulated using the ESP protocol, by configuring a hardware decryption module in the first gateway apparatus, the hardware decryption module decrypts and decapsulates the service packet to obtain the inner packet of the service packet, i.e., the actual packet sent by the source end. Different source ends correspond to different inner packets. As a result, when the IPsec service module distributes the inner packets in a packet-by-packet manner based on the inner packets, it can distribute the inner packets sent by different source ends to different data cores in the first gateway apparatus. This solves the problem of resource waste of other data cores when service packets are directly distributed and packet-by-packet forwarded to the same data core.

Additionally, since the hardware decryption module performs decryption processing on the service packets before sending the service packets to the data cores, when forwarding the inner packets in a packet-by-packet manner based on the inner packets, the orderliness of the inner packets arriving at the same data core can also be ensured.

### BRIEF DESCRIPTION OF THE DRAWINGS

FIG. 1 is a schematic diagram illustrating the interactive networking between a gateway apparatus A and a gateway apparatus B provided in the present disclosure;
FIG. 2 is a flowchart of a packet processing method provided in an example of the present disclosure;
FIG. 3a is one of the schematic diagrams illustrating an application scenario of a packet processing method provided in an example of the present disclosure;
FIG. 3b is the other schematic diagram illustrating an application scenario of a packet processing method provided in an example of the present disclosure;
FIG. 4 is a block diagram of a gateway apparatus provided in an example of the present disclosure;
FIG. 5 is a block diagram of hardware of an electronic device for implementing a packet processing method provided in an example of the present disclosure.

### DETAILED DESCRIPTION

The present disclosure will now be described in detail with an exemplary example illustrated in the drawings. Unless otherwise indicated, the same numerals in different drawings represent the same or similar elements. The examples described in the following exemplary examples do not represent all examples consistent with the present disclosure. The examples of apparatuses and methods consistent with some aspects of the present disclosure.

The terms used in the present disclosure are for the purpose of describing particular examples only and are not intended to be limiting. The singular forms "a," "said," and "the" used in the present disclosure are also intended to include plural forms, unless the context clearly indicates otherwise. It should also be understood that the term "and/or" used herein refers to and encompasses any and all possible combinations of one or more of the corresponding listed items.

It should be understood that although terms such as first, second, third, etc., may be used in the present disclosure to describe various information, these terms should not be limited to such. These terms are merely used to distinguish one type of information from another. For example, without departing from the scope of the present disclosure, first information may also be referred to as second information, and similarly, second information may also be referred to as first information. Depending on the context, the word "if" as used herein may be interpreted as "when" or "in response to determining."

The inventors have found, as illustrated in conjunction with FIG. 1, that on a per-flow basis, service packets sent from different hosts to a gateway apparatus A are original service packets and may have different 5-tuples. When the gateway apparatus A may perform hash calculations on the original service packets based on the 5-tuples and then distribute the original service packets to its multiple data cores based on different hash values. After each of the multiple data cores of the gateway apparatus A performs an ESP encryption on the original service packets, then ESP encapsulated service packets are sent to a gateway apparatus B. When one IPsec tunnel t1 is established between the gateway apparatus A and the gateway apparatus B, outer header of each of encrypted service packets, i.e the ESP encapsulated service packets, have the same outer layer 5-tuples.

The gateway apparatus B may forward the ESP encapsulated service packets, of which outer headers have the same 5-tuples, to one of its multiple data cores, thus wasting resources of its other data cores.

In another way, the gateway apparatus A may distribute the original service packets to its multiple data cores on a per-packet basis, which may result in the original service packets being out of sequence. These original service packets are encrypted into the ESP encapsulated service packet and sent to the gateway apparatus B via the IPsec tunnel t1. The gateway apparatus B forward the ESP encapsulated service packets to its multiple data cores on a per-packet basis, which may result the ESP encapsulated service packets being out of sequence. The ESP encapsulated service packet are decapsulated and forwarded by the multiple data cores on the gateway apparatus B, remaining an out-of-sequence state. For services with high timing requirements, such as audio and video services, leading to a large number of retransmissions and buffering problems, which not only increase network load but also affect user experience.

The present example proposes a packet processing method that can be applied to a first gateway apparatus, which comprises a hardware decryption module, an IPsec service module, and multiple data cores. In the example, the IPsec service module is to receive service packets sent by a second gateway apparatus through the IPsec tunnel t1, and invoke the hardware decryption module in response to a determination that the service packets are encapsulated with the ESP protocol. The hardware decryption module is to decrypt the service packets, to obtain inner packets of the service packets. The IPsec service module is further to obtain an associated data core for each inner packet on a per-flow basis.

Thus, after the IPsec service module receives the service packets sent by a second gateway apparatus through the IPsec tunnel t1, when it is identified that the service packets are encrypted with the ESP protocol by checking outer encapsulation headers, the hardware decryption module, which is configured in the first gateway apparatus, decrypt the service packets to obtain the inner packets of the service packets, i.e., the real packets sent by source terminals. The different inner packets correspond to different source terminals. Therefore, when the IPsec service module distributes based on the inner packet on a per-flow basis, it can distribute inner packets belonging to each of traffic flows to one associated data core of the multiple data cores in the first gateway apparatus.

Furthermore, since the hardware decryption module decrypts the service packets to stripe off the outer ESP headers from the service packets, and the inner packets of the service packets are forwarded on the per-flow basis, it ensures that the inner packets that reach the same data core in sequence.

The packet processing method provided by the present disclosure will now be described in detail below.

Referring to FIG. 2, FIG. 2 is a flowchart of a packet processing method provided by the present disclosure. This method can be applied to a first gateway apparatus, which can be a physical gateway apparatus or another network device in a network that functions as a gateway apparatus, such as a firewall device, a router, and so on. The aforementioned first gateway apparatus may include a hardware decryption module, an IPsec service module, and multiple data cores. When implementing this method, the aforementioned first gateway apparatus may include the following processes:
Process 201: Receive, by the IPsec service module, service packets sent by a second gateway apparatus through an IPsec tunnel.

When the second gateway apparatus sends the service packets to the first gateway apparatus through the IPsec tunnel, the IPsec service module in the first gateway apparatus may receive the service packets.

Process 202: invoke, by the IPsec service module, the hardware decryption module in response to a determination that the service packets are encapsulated with ESP protocol, and decrypt, by the hardware decryption module, the service packets and obtain inner packets of the service packet.

In process 202, since the service packets are encapsulated based on the same one IPsec tunnel, outer encapsulated headers of the service packets have the same 5-tuples, in order to prevent all the service packets being distributed to the same data core, this example proposes to decrypt the service packets and then perform per-stream distribution based on the inner packets of the service packets. In this example, the service packets are decrypted after being identified as encapsulated with the ESP protocol. If any service packet is encapsulated with Authentication Header (AH) protocol, then it will be processed based on a conventional processes.

In addition, when decrypting the service packet, in order to improve the decryption speed of the service packets, this example provides a hardware decryption module within the first gateway apparatus, which is dedicated to decryption operations. Thus, the IPsec service module can invoke this hardware decryption module to decrypt each of the service packets entering the first gateway apparatus. The hardware decryption module decrypts the service packets based on a decryption method corresponding to an ESP protocol encryption method, thereby obtaining the inner packet of the service packet. This way, rapid decryption processing of the service packets is achieved. Because the present disclosure performs decryption processing first, there is no need for subsequent decryption processing by the multiple data cores, thereby it enables inner packets to be rapidly forwarded by the multiple data cores.

In one example, the IPsec service module may forward the service packets to the hardware decryption module for decrypting. In another example, the hardware decryption module may store the service packets in a cache queue, and then the service packets are scheduled based on a First in First out (FIFO) principle. This means that the earlier a service packet is cached in the queue, the earlier it will be processed. The hardware decryption module reads the service packets from the cache queue and performs decryption processing, thus avoiding congestion in the hardware decryption module.

Process 203: obtain, by the IPsec service module, an associated data core on a per-flow basis for each inner packet so that the inner packet is to be forwarded via the associated data core.

In the process 203, the IPsec service module can determine one data core associated with each inner packet on a per-flow basis and then forward each inner packet by that data core. When forwarding inner packets based on a per-stream basis, the inner packets belong to the same service traffic are sent to the same data core. Furthermore, ensuring that the inner packets of the same service traffic are sent sequentially to the same data core preserves the sequence of the inner packets.

In implementing the aforementioned packet processing method, a service packet sent by a second gateway apparatus is received through an IPsec tunnel by the IPsec service module in the first gateway apparatus; if the service packet is identified as a packet encapsulated using the ESP protocol, the hardware decryption module is invoked by the IPsec service module to decrypt the service packet to obtain an inner packet of the service packet; the inner packet is forwarded by the IPsec service module to the corresponding data core on a per-flow basis.

Thus, after the IPsec service module receives the service packets sent by a second gateway apparatus through the IPsec tunnel, when it is identified that the service packets are encrypted with the ESP protocol by checking outer encapsulation headers, the hardware decryption module, which is configured in the first gateway apparatus, decrypts the service packets to obtain the inner packets of the service packets, i.e., the real packets sent by source terminals. The different inner packets correspond to different source terminals. Therefore, when the IPsec service module distributes based on the inner packet on a per-flow basis, it can distribute inner packets belonging to each of traffic flows to one associated data core of the multiple data cores in the first gateway apparatus.

Furthermore, since the hardware decryption module decrypts the service packets to stripe off the outer ESP headers from the service packets, and the inner packets of the service packets are forwarded on a per-flow basis, it ensures that the inner packets that reach the same data core in sequence.

Based on the above examples, the first gateway apparatus may further include a driver. The process 103 can be executed based on the following processes: performing hash calculations on the 3-tuple of the inner packets via the IPsec service module to obtain a hash value of each inner packet; determining the data core associated with each inner packet via the driver, and forwarding each inner packet to its associated data core for further forwarding.

In one example, when the IPsec service module distributes the inner packets to the multiple data cores, it preprocesses the inner packets being decrypted. The IPsec service module performs hash calculations based on the 3-tuples of the inner packets to obtain hash values of each inner packet. For each inner packet, the 3-tuple may include a source IP address such as a private network source IP address, a destination IP address, and a protocol number.

After obtaining the hash value of each inner packet, the driver is to determine the associated data core for forwarding each inner packet. In one example, the hash value of each inner packet is obtained and cached by the IPsec service module. The driver reads the hash value of each inner packet from the IPsec service module, and is then subsequently used to determine the associated data core for forwarding the inner layer packet on a per-flow basis.

In one example, the IPsec service module is to perform the hash calculation on the 3-tuple of each inner packet to obtain the hash value of each inner packet based on following process: invoking a callback function embedded in the IPsec service module to perform the hash calculation on the 3-tuple of each inner packet through the callback function to obtain the hash value of each inner packet.

The callback function, which is embedded in the IPsec service module, is specifically used to calculate the hash value of each inner packet. After calculating the hash value of each inner packet, the driver can also invoke the callback function to obtain the hash value of each inner packet.

Based on the hash value of each inner packet and a total number of multiple data cores in the first gateway apparatus, the driver can calculate a sequence number of the associated data core on a per-flow basis, thereby determining the associated data core for forwarding each inner packet.

In an example of the present disclosure, the callback function mentioned above can be a preprocess callback function, etc.

In an example of the present disclosure, each inner packet being forwarded to the associated data core is based on the following process: writing the inner packet into a packet queue corresponding to the associated data core, so that the associated data core reads each inner packet from its correspondent packet queue and performs further forwarding.

In an example of the present disclosure, each of the multiple data cores is allocated with one packet queue, thereby facilitating to forward of the inner packets on per-flow basis and alleviate processing pressure on the multiple data core. After the associated data core for each inner packet is determined, each inner packet is written into the packet queue corresponding to its associated data core by the driver. Each inner packet is to be read from the packet queue corresponding to its associated data core based on the FIFO principle and then forwarded.

It should be noted that the above examples are described with the second gateway apparatus sending the original service packets to the first gateway apparatus. In practical applications, the first gateway apparatus will also send original service packets to the second gateway apparatus. At this time, the second gateway may process encrypted service packets based on the processes implemented by the first gateway apparatus in examples above. The details will not be redundantly repeated here.

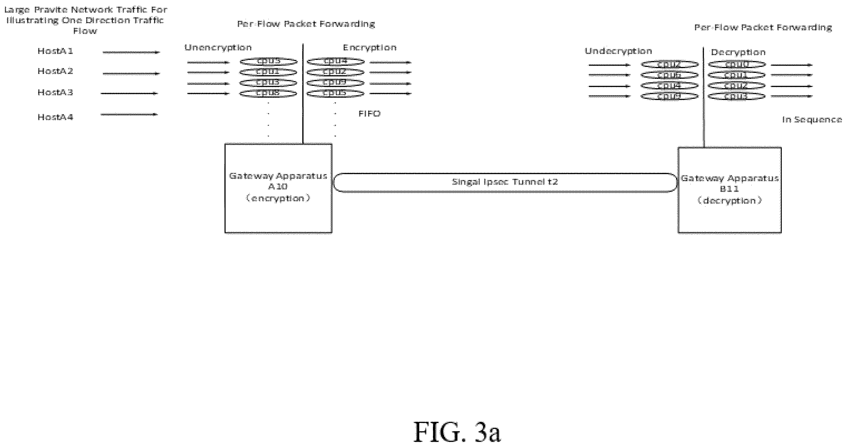

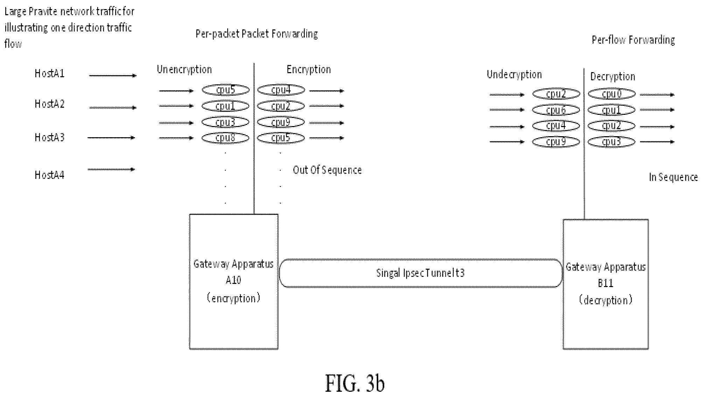

To better understand the packet processing method provided in the present disclosure, an application scenario shown in Figs. 3a and 3b can be taken as an example for illustration. In the application scenario shown in FIGS. 3a and 3b, a gateway apparatus A10 is the above-mentioned second gateway apparatus, a gateway apparatus B11 is the above-mentioned first gateway apparatus. The gateway apparatus A10 and the gateway apparatus B11 respectively comprise multiple data cores (also known as CPU cores), a hardware decryption module, an IPsec service module, and a driver. When the gateway apparatus A10 sends service packets to the gateway apparatus B11, the following scenarios are described separately.

In the application scenario based on FIG. 3a, the gateway apparatus A10 performs packet forwarding on a per-flow basis. Specifically, after receiving original service packets sent by hosts A1-A4 within a private network, the gateway apparatus A10 performs packet forwarding on a per-flow basis. The original service packets from the same host may be identified as belonging to the same service traffic and distributed to the same data core. The data core performs ESP encapsulation on the original service packets to obtain service packets corresponding to the original service packets. The original service packets are inner packets of the service packets. After the ESP encapsulation is completed, the service packets are sent to the gateway apparatus B11 through an IPsec tunnel t2.

Each of the multiple data cores of the gateway apparatus A10 may perform the ESP encapsulation on each original service data based on the IPsec tunnel t2, thus resulting in same 5-tuples of outer ESP encapsulation headers for the service packets. The internal IPsec service module in the gateway apparatus B11 receives the service packets sent by the gateway apparatus A10 through the IPsec tunnel t2 and invoke the hardware decryption module in response to a determination that the service packets are encapsulated with the ESP protocol. The hardware decryption module is to decrypt the service packets, and obtain inner packets of the service packets. The IPsec service module is further to obtain an associated data core ( CPU ) for each inner packet on a per-flow basis. Thus, when the IPsec service module distributes the inner packets decryption by the hardware decryption module on a per-flow basis, it can distribute the inner packets sent from same hosts to the same data cores in the first gateway apparatus. In this way, the problem of resource waste of other data cores caused by packets being distributed to only one of the multiple data cores on a per-flow basis is solved.

In the application scenario based on FIG. 3b, the gateway apparatus A10 performs packet forwarding on a per-packet basis. Specifically, after receiving original service packets sent by the hosts A1-A4 within the private network, the gateway apparatus A10 performs packet forwarding on a per-packet basis. The original service packets are distributed to each of the multiple data cores of the gateway apparatus A10 for encrypting with an ESP encapsulation to obtain service packets of the original service packets, which are then sent to the gateway apparatus B10 through an IPsec tunnel t3.

For the gateway apparatus A, the original service packet distributed to its multiple data cores are out of sequence. Each of the multiple data cores of the gateway apparatus A10 may perform the ESP encapsulation on each original service packet based on the IPsec tunnel t3, thus resulting in same 5-tuples of outer ESP encapsulation headers for the service packets. The internal IPsec service module in the gateway apparatus B11 receives the service packets sent by the gateway apparatus A10 through the IPsec tunnel t3 and invoke the hardware decryption module in response to a determination that the service packets are encapsulated with the ESP protocol. The hardware decryption module is to decrypt the service packets, and obtain inner packets of the service packets. The IPsec service module is further to obtain an associated data core ( CPU )for each inner packet on a per-flow basis . In the present disclosure the inner packets of the service packets are forwarded on a per-flow basis, the inner packets sent from the same host belongs to one service traffic and is to be distributed to the same data core. It ensures that the inner packets reach the same data core in sequence.

Thus, based on the aforementioned examples, the processing pressure on a single data core is alleviated. Inner packets belonging to one service traffic can be evenly distributed to one data core, improving the overall performance of the gateway apparatus and solving the problem of resource waste of data cores. In addition, the aforementioned examples also ensure the sequence transmission and reception of packets without causing out-of-sequence issues, i.e., guaranteeing inner packets are in sequence. At the same time, it reduces the single-core load processing pressure of the gateway apparatus, preventing lagging in audio or video services and improving user experience.

The present disclosure also provides a packet processing apparatus corresponding to the aforementioned examples. The packet processing apparatus can specifically refer to processes in above examples and will not be repeated.

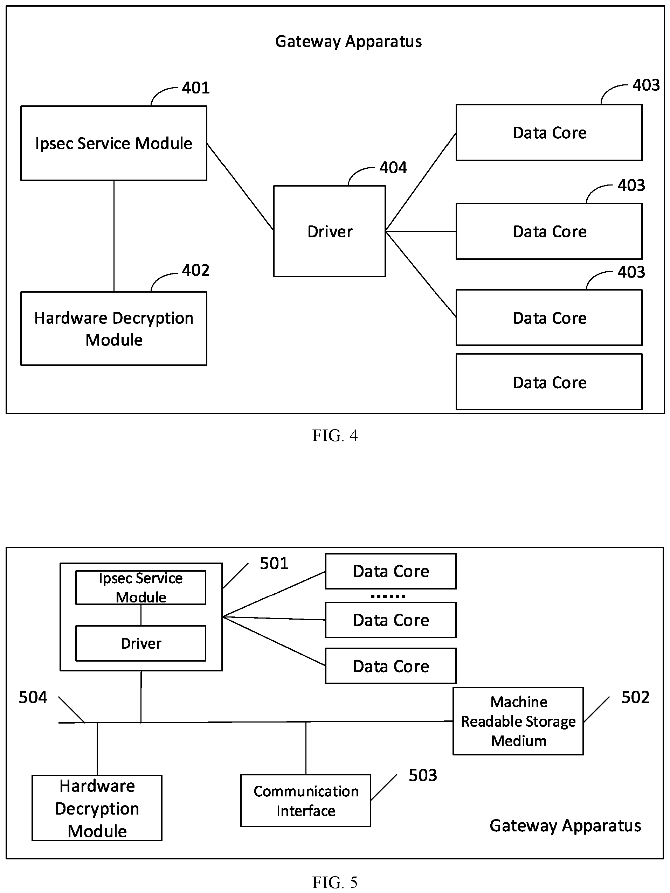

Referring to FIG. 4, FIG. 4 illustrates a gateway apparatus provided in an exemplary example of the present disclosure. The gateway apparatus comprises: a hardware decryption module, an IPsec service module, and multiple data cores, wherein:
The aforementioned IPsec service module 401 is to receive service packets sent by a second gateway apparatus through an IPsec tunnel.

The aforementioned hardware decryption module 402 is to, if the IPsec service module 401 identifies the service packet as a packet encapsulated using the ESP protocol, then under the invocation of the IPsec service module, decrypt the service packet to obtain an inner packet of the service packet.

The aforementioned IPsec service module 401 is also to obtain the associated data core of the inner packet on a per-flow basis.

The aforementioned data core 403 is to forward the inner packet.

Thus, after the IPsec service module receives a service packet sent by the second gateway apparatus through the IPsec tunnel, when it is identified that the service packet is obtained through encryption and encapsulation using the ESP protocol, by configuring a hardware decryption module in the first gateway apparatus, the hardware decryption module decrypts and encapsulates the service packet to obtain the inner packet of the service packet, which is the actual packet sent by the source terminal. Different source terminals correspond to different inner packets. In this way, when the IPsec service module distributes based on the inner packet on a per-flow basis, it can distribute the inner packets sent by different source terminals to different data cores in the first gateway apparatus. In this way, it also solves the problem of resource wastage of other data cores when the service packet is directly distributed and forwarded on a per-flow basis to the same data core.

Furthermore, since the hardware decryption module performs decryption processing on the service packet before forwarding it to the data core, when performing per-flow forwarding based on the inner packet, it can also ensure the sequence of the inner packets arriving at the same data core.

In an example of the present disclosure, in this example, the aforementioned gateway apparatus further comprises a driver 404.

The aforementioned IPsec service module 401 is further to perform hash computation processing on a 3-tuple of the inner packet to obtain a hash value of the inner packet.

The aforementioned driver 404 is to determine the data core for forwarding the inner packet based on the hash value, and forward the inner packet to the data core 403.

Further, the aforementioned IPsec service module 401 is further to invoke a callback function in the IPsec service module 401, so that the callback function performs hash computation processing on the 3-tuple of the inner packet to obtain the hash value of the inner packet.

Further, the aforementioned driver 404 is further to invoke the callback function to obtain the hash value; and determine the data core 403 for forwarding the inner packet using the hash value and the number of data cores included in the gateway apparatus.

In an example of the present disclosure, in this example, the aforementioned driver 404 is further to write the inner packet into a packet queue corresponding to the data core.

The aforementioned data core 403 is further to read the inner packet from the packet queue and performing forwarding processing.

Based on the same inventive concept, an example of the present disclosure provides another gateway apparatus. As shown in FIG. 5, the gateway apparatus comprises a processor 501, a machine-readable storage medium 502, a hardware decryption module, and multiple data cores. The aforementioned processor 501 comprises an IPsec service module and a driver. The machine-readable storage medium 502 stores computer programs executable by the processor 501. The processor 501, the hardware decryption module, and the data cores are prompted by the computer programs to execute a packet processing method provided in any example of the present disclosure. Furthermore, the gateway apparatus also comprises a communication interface 503 and a communication bus 504, wherein the processor 501, the communication interface 503, and the machine-readable storage medium 502 intercommunicate with each other through the communication bus 504.

The aforementioned communication bus mentioned in the gateway apparatus may be a Peripheral Component Interconnect (PCI) bus or an Extended Industry Standard Architecture (EISA) bus, etc. The communication bus can be divided into an address bus, a data bus, a control bus, etc. For ease of representation, it is only represented by one thick line in the figure, but it does not mean that there is only one bus or one type of bus.

The communication interface is to communication between the aforementioned gateway apparatus and other devices.

The aforementioned machine-readable storage medium 502 may be a memory, which may include Random Access Memory (RAM), DDR SRAM (Double Data Rate Synchronous Dynamic Random Access Memory), and may also include a Non-Volatile Memory (NVM), such as at least one disk storage. In an example of the present disclosure, the memory may also be at least one storage device located away from the aforementioned processor.

The aforementioned processor may be a general-purpose processor, including a Central Processing Unit (CPU), a Network Processor (NP), etc.; it may also be a Digital Signal Processor (DSP), an Application Specific Integrated Circuit (ASIC), a Field-Programmable Gate Array (FPGA), or other programmable logic devices, discrete gate or transistor logic devices, discrete hardware components.

Furthermore, this example also provides a machine-readable storage medium. The machine-readable storage medium stores computer programs. When invoked and executed by a processor, the computer programs prompt the processor to execute the method provided in any example of the present disclosure.

For the examples of the gateway apparatus and the machine-readable storage medium, since the method content involved is basically similar to the aforementioned method examples, the description is relatively simple, and references can be made to the partial description of the method examples for related content.

It should be noted that in this document, relational terms such as first and second are only used to distinguish one entity or operation from another entity or operation without necessarily requiring or implying any such actual relationship or order between these entities or operations. Moreover, the terms "include," "contain," or any other variants are intended to cover non-exclusive inclusions, such that a process, method, article, or apparatus that comprises a series of elements not only comprises those elements but also comprises other elements that are not explicitly listed, or further comprises elements that are inherent to such process, method, article, or apparatus. In the absence of more restrictions, elements defined by the statement "including a ..." do not exclude the presence of additional identical elements in the process, method, article, or apparatus that comprises the elements.

The realization process of the functions and effects of each unit/module in the aforementioned apparatus is specifically detailed in the realization process of the corresponding processes in the aforementioned method, and will not be repeated here.

The apparatus examples basically correspond to the method examples, references can be made to the partial description of the method examples for related content. The apparatus examples described above are merely illustrative, wherein the units/modules described as separate components may or may not be physically separated, and the components displayed as units/modules may or may not be physical units/modules, that is, the components may be located in one place or distributed across multiple network units/modules. Some or all of the units/modules can be selected to achieve the purpose of the examples of the present disclosure based on actual needs. Those skilled in the art can understand and implement it without creative effort.

The above description is only the preferred examples of the present disclosure and is not used to limit the present disclosure. Any modifications, equivalent substitutions, improvements, etc., made within the spirit and principles of the present disclosure, should be included within the scope of protection of the present disclosure.

## Claims

1. A method for packet processing, wherein the method is applied to a first gateway apparatus comprising a hardware decryption module, an IPsec service module, and a plurality of data cores, the method comprises:
receiving, by the IPsec service module, a service packet sent by a second gateway apparatus through an IPsec tunnel;
invoking, by the IPsec service module, the hardware decryption module in response to a determination that the service packet is encapsulated with, Encapsulating Security Payload, ESP protocol;
decrypting, by the hardware decryption module, the service packet, and obtaining an inner packet of the service packet;
obtaining, by the IPsec service module, a data core associated with the inner packet on a per-flow basis so that the inner packet is to be forwarded via the associated data core.

2. The method of claim 1, wherein the obtaining, by the IPsec service module, the data core associated with the inner packet on a per-flow basis so that the inner packet is to be forwarded via the associated data core comprises:
performing, by the IPsec service module, a hash calculation on a 3-tuple of the inner packet to obtain a hash value of the inner packet;
determining, by a driver of the first gateway apparatus, the associated data core for forwarding the inner packet based on the hash value, and forwarding the inner packet to the associated data core, so that the inner packet is to be forwarded via the associated data core.

3. The method of claim 2, wherein the performing, by the IPsec service module, the hash calculation on the 3-tuple of the inner packet to obtain the hash value of the inner packet comprises:
invoking, by the IPsec service module, a callback function embedded in the IPsec service module, so that the callback function performs the hash calculation on the 3-tuple of the inner packet to obtain the hash value of the inner packet.

4. The method of claim 3, wherein the determining, by the driver, the associated data core for forwarding the inner packet based on the hash value, and forwarding the inner packet to the associated data core comprises:
invoking, by the driver, the callback function to obtain the hash value;
determining, by the driver, the associated data core for forwarding the inner packet based on the hash value and a total number of the plurality of data cores embedded in the first gateway apparatus.

5. The method of claim 2, wherein the forwarding the inner packet to the associated data core comprises:
writing the inner packet into a packet queue corresponding to the associated data core, so that the associated data core reads the inner packet from the packet queue and performs forwarding processing.

6. A gateway apparatus, wherein the gateway apparatus comprises a hardware decryption module, an IPsec service module, and a plurality of data cores,
the IPSEC service module is to receive a service packet sent by a second gateway apparatus through an IPsec tunnel and check an outer encapsulation of the service packet, and invoke the hardware decryption module based on a determination that the service packet is encapsulated with, Encapsulating Security Payload, ESP protocol;
the hardware decryption module is to decrypt the service packet, and obtain an inner packet of the service packet;
the IPsec service module is further to obtain an associated data core from the plurality of data cores, for forwarding the inner packet on a per-flow basis;
the associated data core is to forward the inner packet.

7. The gateway apparatus of claim 6, wherein the gateway apparatus further comprises a driver;
the IPsec service module is further to perform hash calculation on a 3-tuple of the inner packet to obtain a hash value of the inner packet;
the driver is to determine the associated data core for forwarding the inner packet based on the hash value, and forward the inner packet to the associated data core.

8. The gateway apparatus of claim 7, wherein
the IPsec service module is further to invoke a callback function embedded in the IPsec service module, so that the callback function performs hash computation on the 3-tuple of the inner packet to obtain the hash value of the inner packet.

9. The gateway apparatus of claim 8, wherein
the driver is further to invoke the callback function to obtain the hash value; and determine the associated data core for forwarding the inner packet based on the hash value and a total number of the plurality of data cores embedded in the gateway apparatus.

10. The gateway apparatus of claim 7, wherein
the driver is further to write the inner packet into a packet queue corresponding to the associated data core.
the associated data core is further to read the inner packet from the packet queue, and forward the inner packet.
